# EUROPEAN PATENT SPECIFICATION

(11) **EP 1 424 909 B1**
(45) Date of publication and mention of the grant of the patent: **04.04.2007**
(21) Application number: 02767641.0
(22) Date of filing: 16.09.2002
(51) Int. Cl.: A23L 2/395, A23L 2/02, A23L 2/58, A23G 9/04, A23F 3/16, A23F 3/34

(54) **A METHOD FOR USE IN PREPARING A DRINK**
METHODE ZUM VORBEREITEN VON GETRÄNKE
PROCEDE SERVANT A PREPARER UNE BOISSON

(30) Priority: 14.09.2001 GB 0122248
(43) Date of publication of application: 09.06.2004
(73) Proprietor: Rugeris, Jess Edward, West Molesey, Surrey KT8 1SA (GB)
(72) Inventor: Rugeris, Jess Edward, West Molesey, Surrey KT8 1SA (GB)
(74) Representative: Gill, David Alan
(86) International application number: PCT/GB2002/004202
(87) International publication number: WO 2003/024251

(56) References cited:
- DE-A- 19 847 934
- US-A- 2 963 368
- US-A- 3 108 877
- US-A- 6 045 839
- DATABASE WPI Section Ch, Week 199922 Derwent Publications Ltd., London, GB; Class D13, AN 1999-257552 XP002226662 & JP 11 075693 A (DUSKIN CO LTD), 23 March 1999 (1999-03-23)
- PATENT ABSTRACTS OF JAPAN vol. 015, no. 222 (M-1121), 6 June 1991 (1991-06-06) & JP 03 063481 A (HARUMI YOKOGAWA), 19 March 1991 (1991-03-19)

## Description

This invention relates to a method for use in preparing a drink, to a product of the method, and to a drink employing the product.

There are available nowadays pure and natural herbal substances which, when they are introduced into a liquid, produce a pleasant and satisfying drink. These substances are sold for use in preparing what are known as herbal "teas". The substances are generally material from plants, and include leaves, seeds and fruits.

US 6 045 839 described colored ice blocks containing different types of tea or lemon water.

JP 11 075 613 describes ice cubes containing coffee. The ground coffee beans are extracted with hot water, cooled and frozen to separate ice cubes.

Colourings are also known to be introduced into beverages to render these more attractive to customers. However, the quality, variety and selectability of such known colourings is disadvantageously limited.

One method to be described below, by way of example in illustration of the invention, involves the production of blocks of tasteless coloured ice and includes the steps of introducing a vegetable and/or fruit substance into a liquid, and from which substance a predetermined colour is to be derived, the liquid being at an elevated temperature for the infusion of the said substance therein, filtering the liquid and allowing the product of the infusion to cool, and then freezing the cooled infused liquid into easily separable ice blocks of said predetermined colour.

Preferably, the liquid comprises water which is heated to attain boiling point prior to the addition of the said substance. The product of the infusion is preferably cooled to room temperature.

The ice blocks, so formed, may be used to make an instant drink by adding them to hot water, or they may be used to cool a drink which has been prepared separately.

The ice blocks can thus be advantageously employed to impart colour due to their presence within the liquid to which they are added.

In one particular illustrative method, a mixture of fruit or vegetable substances is added to a container of pure spring water, which has been boiled and cooled to a temperature of 90 C, the infusion so produced being strained from the container and fed into ice-cube moulds, where it is frozen and kept in a refrigerator until it is needed for use in cooling a drink. Advantageously, the ratio of the infused product to liquid for forming the ice blocks is 100ml to 2.2 litres.

Preferably, the step of filtration is conducted by means of a cotton filter, and preferably a 100% cotton filter.

It will be understood that varieties of the substances may be mixed in proportions which produce infusions of preferred colours.

The infusions may, in another illustrative method, be bottled and sold in retail shops for customers to use in making ice cubes.

The temperature of the liquid in which the substances are infused may be adjusted to suit the substance in order to bring its colour to the best advantage.

In making the infusions it has been found beneficial to stir the contents of the container gently at intervals during the process of making the infusions.
It will be understood that, although particular arrangements, illustrative of the invention, have been described by way of example, variations and modifications thereof may be conceived as well as other arrangements.

Advantageously, the ice blocks, with their infused filtered content, provide means for colouring a drink in a particularly creative and aesthetic manner. A variety of ice blocks can be readily selected by a consumer for addition to a liquid in any order and/or combination required so as to arrive at an attractive drink. Importantly, the ice blocks of the present invention do not add any taste to the beverage whatsoever.

The range and intensity of the colours can be controlled through manipulation of the filtration process and infusion time employed.

## Claims

1. A method of producing blocks of tasteless coloured ice for use in preparing a beverage, the method including the steps of introducing a vegetable and/or fruit substance into a liquid, and from which substance a predetermined colour is to be derived, the liquid being at an elevated temperature for the infusion of the said substance therein, and filtering the infusion and the method further including the step of allowing the product of the infusion to cool, and then freezing the cooled infused liquid so as to arrive at readily separable ice blocks of the said predetermined colour.

2. A method as claimed in Claim 1 wherein the substance is introduced to the liquid for a period in the region of five minutes.

3. A method as claimed in Claim 1 or 2, wherein the said substance is added to a container of the liquid in the form of pure spring water and the infusion so produced is strained from the container and fed into ice moulds.

4. A method as claimed in Claim 1, 2 or 3 and including the step of boiling the liquid and then cooling the same to a temperature in the region of 90 C.

5. A method as claimed in Claim 1, 2, 3 or 4 wherein a mixture of substances is introduced to the liquid.

6. A method as claimed in any one or more of Claims 1 to 5, and including the step of gently agitating the substance within the liquid during the process of making the infusions.

7. A method of preparing a beverage and including the steps of the method of any one or more of Claims 1 to 6.

8. A tasteless coloured ice block arranged to be introduced into a liquid beverage, wherein the ice block comprises a frozen liquid including an infusion of a vegetable and/or fruit substance, formed according to the method of any one or more of Claims 1 to 6.

9. A beverage prepared by the addition of the ice block of Claim 8 into a liquid in which the ice block melts.

## Patentansprüche

1. Verfahren zur Herstellung von Blöcken von geschmacklosem, gefärbtem Eis zur Verwendung bei der Zubereitung eines Getränks, wobei das Verfahren die folgenden Schritte einschließt: Einbringen einer Gemüse- und/oder Fruchtsubstanz in eine Flüssigkeit, und von deren Substanz eine vorgegebene Farbe erlangt wird, wobei die Flüssigkeit eine erhöhte Temperatur für den Aufguss der genannten Substanz darin hat, und Filtern des Aufgusses, und das Verfahren schließt weiter den Schritt des Abkühlenlassens des Produkts des Aufgusses ein, und dann Gefrieren der abgekühlten aufgegossenen Flüssigkeit, um zu leicht trennbaren Eisblöcken der genannten vorgegebenen Farbe zu gelangen.

2. Verfahren nach Anspruch 1, worin die Substanz für eine Dauer im Bereich von fünf Minuten in die Flüssigkeit eingebracht wird.

3. Verfahren nach Anspruch 1 oder 2, worin die genannte Substanz zu einem Behälter der Flüssigkeit in Form von reinem Quellwasser gegeben wird und der derart hergestellte Aufguss aus dem Behälter abgegossen und in Eisformen eingegeben wird.

4. Verfahren nach Anspruch 1, 2 oder 3 und einschließlich des Schritts des Siedens der Flüssigkeit und dann Abkühlen derselben auf eine Temperatur im Bereich von 90 C.

5. Verfahren nach Anspruch 1, 2, 3 oder 4, worin eine Mischung von Substanzen in die Flüssigkeit eingebracht wird.

6. Verfahren nach einem oder mehreren der Ansprüche 1 bis 5 und einschließlich des Schritts des behutsamen Rührens der Substanz innerhalb der Flüssigkeit während des Prozesses der Herstellung der Aufgüsse.

7. Verfahren zur Herstellung eines Getränks und einschließlich der Schritte des Verfahrens eines oder mehrerer der Ansprüche 1 bis 6.

8. Geschmackloser, gefärbter Eisblock, der vorbereitet wird, um in ein flüssiges Getränk eingebracht zu werden, worin der Eisblock eine gefrorene Flüssigkeit, einschließlich eines Aufgusses einer Gemüse- und/oder Fruchtsubstanz, umfasst, der gemäß des Verfahrens eines oder mehrerer der Ansprüche 1 bis 6 geformt wird.

9. Getränk, das durch die Zugabe des Eisblocks von Anspruch 8 in eine Flüssigkeit, in der der Eisblock schmilzt, zubereitet wird.

## Revendications

1. Une méthode pour produire des blocs de glace insipides colorés à utiliser pour préparer une boisson, la méthode incluant les étapes d'introduction d'une substance légume et/ou fruit dans un liquide, et de laquelle substance une couleur prédéterminée va être dérivée, le liquide étant à une température élevée pour l'infusion de ladite substance dans celui-ci, et de filtrage de l'infusion et la méthode incluant en plus l'étape permettant au produit de l'infusion de refroidir, puis de congélation du liquide infusé refroidi de façon à arriver à des blocs de glace facilement séparables de ladite couleur prédéterminée.

2. Une méthode selon la revendication 1 où la substance est introduite dans le liquide pendant une période de l'ordre de cinq minutes.

3. Une méthode selon la revendication 1 ou 2, où ladite substance est ajoutée à un contenant du liquide sous la forme d'eau de source pure et où l'infusion ainsi produite est tamisée depuis le contenant et alimentée dans des moules à glace.

4. Une méthode selon la revendication 1, 2 ou 3 et incluant l'étape d'ébouillantage du liquide, puis le refroidissement de celui-ci à une température de l'ordre de 90 C.

5. Une méthode selon la revendication 1, 2, 3 ou 4 où un mélange de substances est introduit dans le liquide.

6. Une méthode selon l'une quelconque ou plusieurs des revendications 1 à 5, et incluant l'étape d'agitation légère de la substance dans le liquide durant le procédé de fabrication des infusions.

7. Une méthode pour préparer une boisson et incluant les étapes de la méthode de l'une quelconque ou de plusieurs des revendications 1 à 6.

8. Un bloc de glace insipide coloré agencé pour être introduit dans une boisson liquide, où le bloc de glace comprend un liquide congelé incluant une infusion d'une substance légume et/ou fruit, formé selon la méthode de l'une quelconque ou de plusieurs des revendications 1 à 6.

9. Une boisson préparée par l'addition du bloc de glace de la revendication 8 dans un liquide dans lequel le bloc de glace fond.
